# EUROPEAN PATENT APPLICATION

(11) **EP 4 797 393 A2**
(43) Date of publication of application: **26.08.2026**
(21) Application number: 25224777.0
(22) Date of filing: 18.12.2025
(51) Int. Cl.: H01M 50/103, H01M 50/147, H01M 50/15, H01M 50/186, H01M 50/342, H01M 50/55, H01M 50/553, H01M 50/593

(54) **SECONDARY BATTERY**

(30) Priority: 20.02.2025 KR 20250022044
(71) Applicant: SAMSUNG SDI CO., LTD., Yongin-si, Gyeonggi-do 17084 (KR)
(72) Inventor: KIM, Hyun, 17084 Yongin-si (KR)
(74) Representative: Maiwald GmbH

(57) **Abstract**

A secondary battery includes an electrode assembly, a case accommodating the electrode assembly, the case including an opening, a cap plate sealing the opening of the case, a pair of electrode terminals coupled to the cap plate and electrically connected to the electrode assembly, and a protective member between the electrode assembly and the cap plate.

## Description

### BACKGROUND

### 1. Field

The present disclosure relates to a secondary battery.

### 2. Description of the Related Art

A secondary battery is a battery that, unlike a primary battery that cannot be charged, may be charged and discharged. A low-capacity secondary battery is used in small portable electronic devices such as smartphones, feature phones, notebook computers, digital cameras, and camcorders, and a high-capacity secondary battery is widely used in motor driving power sources of hybrid vehicles and electric vehicles or in power storage batteries. Such a secondary battery includes an electrode assembly composed of a positive electrode and a negative electrode, a case that accommodates the electrode assembly, and an electrode terminal connected to the electrode assembly. Such a secondary battery may also include a vent portion capable of releasing heat and gas upon occurrence of an event, such as an internal short circuit, an overcurrent or overvoltage charging state, exposure to a high temperature, or an external impact.

The foregoing information disclosed in the background art described above is only intended to enhance understanding of the background of the present disclosure. Thus, the foregoing background information may include information that does not constitute prior art.

### SUMMARY

According to an aspect of the present disclosure, a secondary battery may include an electrode assembly, a case accommodating the electrode assembly and including an opening on at least one side, a cap plate sealing the opening, a pair of electrode terminals coupled to the cap plate and electrically connected to the electrode assembly, and a protective member between the electrode assembly and the cap plate.

In some embodiments, a melting point of the protective member is greater than or equal to 1,000 degrees Celsius.

In some embodiments, the protective member may include at least one of copper, stainless steel, tungsten, molybdenum, titanium, chromium, nickel, osmium, and combinations thereof.

In some embodiments, the protective member may include a pair of first terminal holes corresponding to the electrode terminals and penetrating the protective member, a first vent hole penetrating the protective member, and a first vent portion sealing the first vent hole and may include a fracture portion and a non-fracture portion.

In some embodiments, the non-fracture portion is in contact with an edge of the first vent hole and forms an outer shape of the first vent portion.

In some embodiments, the fracture portion may include a first notch formed along a longitudinal direction of the protective member, and a second notch extending in an outward direction of the protective member at a certain angle from a first point of the first notch.

In some embodiments, the second notch may include two notches extending diagonally from the first point of the first notch, and two notches extending diagonally from a second point located at a position symmetrical to the first point of the first notch about a center of the first notch.

In some embodiments, the protective member may include at least one of ceramic, glass, silicon, limestone, aluminum oxide (Al₂O₃), indium tin oxide (ITO), magnesium alloy, and combinations thereof.

In some embodiments, the protective member may include a pair of first terminal holes corresponding to the electrode terminals and penetrating the protective member, and a first vent hole penetrating the protective member.

In some embodiments, the cap plate may include a pair of second terminal holes corresponding to the electrode terminals and penetrating the cap plate, a second vent hole penetrating the cap plate, and a second vent portion sealing the second vent hole.

In some embodiments, the case may include aluminum.

In some embodiments, a secondary battery may include an electrode assembly, a case accommodating the electrode assembly and including an opening on at least one side, a cap plate sealing the opening, a pair of electrode terminals coupled to the cap plate and electrically connected to the electrode assembly, a protective member between the electrode assembly and the cap plate, and a guide member connected to the protective member and extending in a direction from the protective member toward a surface of the case facing the protective member.

In some embodiments, a length of the guide member may be half of a distance from the protective member to the surface of the case facing the protective member.

In some embodiments, a length of the guide member may be equal to a distance from the protective member to the surface of the case facing the protective member.

In some embodiments, the guide member may include the same material as the protective member.

In some embodiments, the guide member may be connected to at least one long side of the protective member.

In some embodiments, the guide member may be connected to both long sides of the protective member so as to face each other.

In some embodiments, a melting point of the protective member may be greater than or equal to 1,000 degrees Celsius.

In some embodiments, the protective member may include at least one of copper, stainless steel, tungsten, molybdenum, titanium, chromium, nickel, osmium, and combinations thereof.

In some embodiments, the protective member may include a pair of first terminal holes corresponding to the electrode terminals and penetrating the protective member, a first vent hole penetrating the protective member, and a first vent portion sealing the first vent hole and may include a fracture portion and a non-fracture portion.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded perspective view of a secondary battery according to an embodiment of the present disclosure;
FIG. 2 illustrates a perspective view of a protective member included in a secondary battery according to an embodiment of the present disclosure;
FIG. 3 illustrates a perspective view of a protective member included in a secondary battery according to an embodiment of the present disclosure;
FIG. 4 illustrates a top view of a protective member and a first vent portion included in a secondary battery according to an embodiment of the present disclosure;
FIG. 5 illustrates a top view of a first vent portion of a secondary battery according to an embodiment of the present disclosure;
FIG. 6 illustrates a top view of a first vent portion of a secondary battery according to an embodiment of the present disclosure;
FIG. 7 illustrates an exploded perspective view of a secondary battery according to an embodiment of the present disclosure;
FIG. 8 illustrates a perspective view of a protective member and a guide member included in a secondary battery according to an embodiment of the present disclosure;
FIG. 9 illustrates a perspective view of a protective member and a guide member included in a secondary battery according to an embodiment of the present disclosure;
FIG. 10 illustrates a perspective view of a protective member and a guide member included in a secondary battery according to an embodiment of the present disclosure; and
FIG. 11 illustrates a perspective view of a protective member and a guide member included in a secondary battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of " 1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the scope of the disclosure.

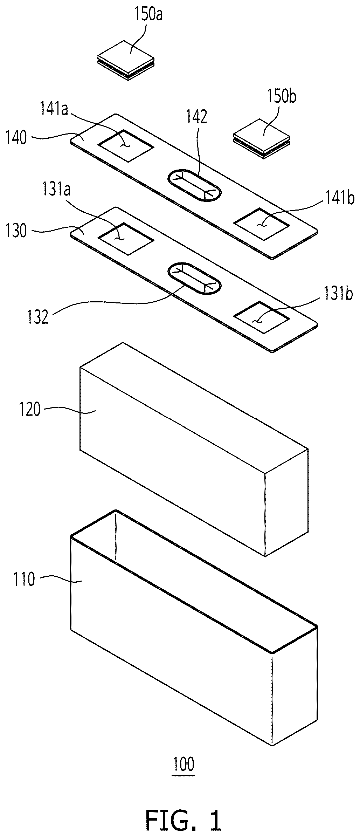

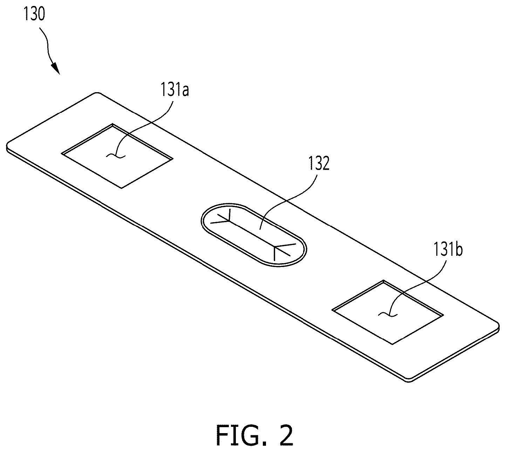

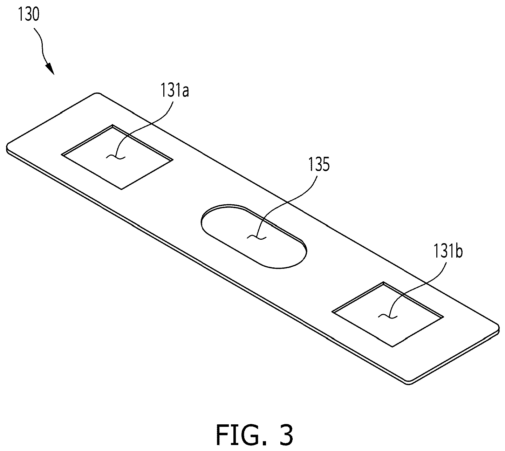

FIG. 1 illustrates an exploded perspective view of a secondary battery 100 according to an embodiment of the present disclosure. FIGS. 2 and 3 each illustrate a perspective view of a protective member included in the secondary battery according to an embodiment of the present disclosure.

Referring to FIG. 1, the secondary battery 100 according to an embodiment of the present disclosure may include an electrode assembly 120, a case 110 that accommodates the electrode assembly 120 and includes an opening on at least one side, a cap plate 140 that seals the opening, a pair of electrode terminals 150a, 150b coupled to the cap plate 140 and electrically connected to the electrode assembly 120, and a protective member 130 disposed between the electrode assembly 120 and the cap plate 140.

The electrode assembly 120 may be formed by winding or stacking a stack of a first electrode plate, a separator, and a second electrode plate, which are formed as thin plates or films. When the electrode assembly 120 is a wound stack, a winding axis may be parallel to the longitudinal direction (e.g., the y direction) of the case 110. In other embodiments, the electrode assembly 120 may be a stack type rather than a winding type, and the shape of the electrode assembly 120 is not limited in the present disclosure. In addition, the electrode assembly 120 may be a Z-stack electrode assembly in which a positive electrode plate and a negative electrode plate are inserted into both sides of a separator, which is then bent into a Z-stack. In addition, one or more electrode assemblies 120 may be stacked such that long sides of the electrode assemblies 120 are adjacent to each other and accommodated in the case 110, and the number of electrode assemblies 120 in the case 110 is not limited in the present disclosure. The first electrode plate of the electrode assembly 120 may act as a negative electrode, and the second electrode plate may act as a positive electrode. Of course, the reverse is also possible. Therefore, the first electrode plate of the electrode assembly may act as a positive electrode, and the second electrode plate may act as a negative electrode.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃₃ SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The case 110 may form an overall external appearance of the secondary battery 100. For example, the secondary battery 100 may be a prismatic battery. In this case, the case 110 of the secondary battery 100 may have, e.g., a roughly rectangular parallelepiped shape.

The case 110 may have one end open so that an accommodation space for accommodating the electrode assembly 120 is formed. The open surface of the case 110 may be the top surface, side surface, or bottom surface of the case 110. FIG. 1 illustrates an example in which the case 110 is open at an upper surface.

For example, the case 110 may have a rectangular bottom surface and four side walls extending perpendicularly from the bottom surface to form a box shape with one open end. The side walls may include two opposing long sides and two opposing short sides, so the case 110 may be provided in a box shape open at one end. Accordingly, the electrode assembly 120 may be supported by the bottom surface of the case 110 and surrounded by the four side walls inside the case 110.

The electrode assembly 120 may be inserted into the internal accommodation space of the case 110 through the open surface of the case 110. Thereafter, the cap plate 140 may be coupled to the open surface of the case 110 to seal the case 110. For example, the cap plate 140 may be coupled to an end of the side walls of the case 110 so as to close the open end of the case 110.

According to an embodiment of the present disclosure, the protective member 130 may be disposed between the electrode assembly 120 and the cap plate 140. A melting point of the protective member 130 may be greater than or equal to 1,000 degrees Celsius. If an event such as thermal runaway occurs in the secondary battery 100, heat and gas discharged through a vent portion may reach about 1,000 degrees Celsius. Because the protective member 130 according to an embodiment of the present disclosure is configured to have a melting point greater than or equal to 1,000 degrees Celsius, the protective member 130 may withstand this high-temperature heat and gas without melting. The protective member 130 may include at least one of copper, stainless steel, tungsten, molybdenum, titanium, chromium, nickel, osmium, and combinations thereof.

Referring to FIGS. 1 and 2, the protective member 130 may include a pair of first terminal holes 131a, 131b corresponding to the electrode terminals and penetrating the protective member 130, a first vent hole, and a first vent portion 132 that seals the first vent hole and includes a fracture portion and a non-fracture portion. For example, the first vent portion 132 may be between the pair of first terminal holes 131a, 131b.

When an event such as thermal runaway occurs in the secondary battery, the first vent portion 132 included in the protective member 130 may be opened first by the high-temperature gas and pressure generated. As high-temperature heat and gas cause the fracture portion of the first vent portion 132 to break, the first vent portion 132 may unfold in a direction toward the cap plate 140 (e.g., an upward direction in FIG. 1) around the non-fracture portion. The unfolded first vent portion 132 may contact the cap plate 140 and guide the high-temperature heat and gas, generated by an event such as thermal runaway, toward a second vent portion 142 of the cap plate 140 to be discharged. Thus, because the high-temperature heat and gas generated by thermal runaway are discharged through the second vent portion 142 of the cap plate 140, which is designed to fracture, to the outside and do not directly contact other configurations of the cap plate 140, structural damage to the cap plate 140 may be prevented.

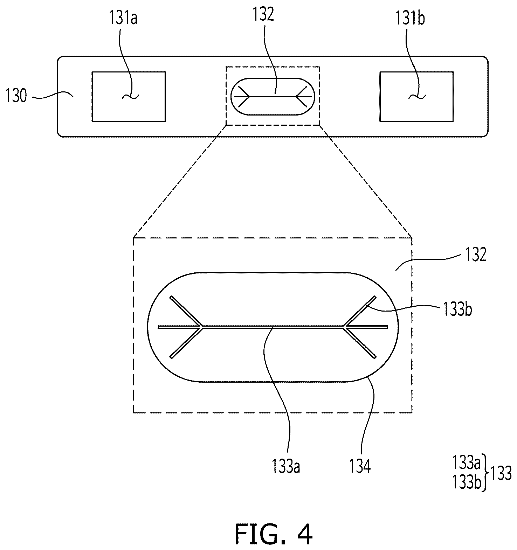

The shape and function of the fracture portion and the non-fracture portion included in the first vent portion 132 will be described in detail below with reference to FIGS. 4 to 6. Depending on the material included in the protective member 130, the configuration and shape of the protective member 130 may vary. According to an embodiment of the present disclosure, the protective member 130 may include at least one of ceramic, glass, silicon, limestone, aluminum oxide (Al₂O₃), indium tin oxide (ITO), magnesium alloy, and combinations thereof.

Referring to FIG. 3, the protective member 130 may include a pair of first terminal holes 131a, 131b corresponding to the electrode terminals and penetrating the protective member 130, and a first vent hole 135 penetrating the protective member 130. Unlike the case where the protective member 130 includes a material such as copper or stainless steel, the protective member 130 may include a non-ductile material such as ceramic. In such a case, if a first vent portion is present, the first vent portion may not maintain its form and may break due to the high-temperature heat and high-pressure gas generated inside the secondary battery. Therefore, in that case, if a first vent portion is provided, the first vent portion may not function to guide the high-temperature heat and gas to the second vent portion 142 of the cap plate. For this reason, in this configuration, the protective member 130 may not include a first vent portion, and only the first vent hole 135 may be provided.

Referring again to FIG. 1, the cap plate 140 may be disposed on the protective member 130. The cap plate 140 may include a pair of second terminal holes 141a, 141b corresponding to the electrode terminals 150a, 150b and penetrating the cap plate 140, a second vent hole penetrating the cap plate 140, and a second vent portion 142 sealing the second vent hole.

The second vent portion 142 may be designed with relatively weaker strength so as to relieve internal pressure when the internal pressure accumulates above a predetermined critical point. The second vent portion 142 may fracture under an internal pressure exceeding this critical point and thereby relieve the internal pressure, preventing an explosion or ignition in advance.

The second vent hole may be disposed between the pair of second terminal holes 141a, 141b arranged on the cap plate 140. Upon fracturing of the second vent portion 142, a discharge may be made through the second vent hole. The discharge may include vent gas, explosive pressure, flame, and debris.

The second vent portion 142 may be coupled to the second vent hole in a state of being inserted into the second vent hole. Accordingly, the second vent portion 142 may seal the second vent hole.

The second vent portion 142 may have a shape corresponding to (e.g., same as) the first vent portion 132 of the protective member 130. In addition, the second vent portion 142 may be formed at a position corresponding to (e.g., vertically overlapping) the first vent portion 132 of the protective member 130. Hence, the high-temperature heat and gas released through the first vent portion 132 of the protective member 130 may be discharged directly to the outside via the second vent portion 142 of the cap plate 140.

In FIG. 1, only one second vent portion 142 is formed in a central region of the cap plate 140; however, the number and position of the second vent portion 142 may vary. The shape of the cap plate 140, its internal pressure, or its capacity, among other factors, may be taken into consideration to determine the number and arrangement of vent portions as needed. For example, the cap plate 140 may include a plurality of second vent portions 142. When the internal pressure in the case 110 reaches a specified pressure, these second vent portions 142 may open, and they may be arranged along the longitudinal direction of the cap plate 140.

The cap plate 140 may be coupled to a pair of electrode terminals 150a, 150b (i.e., a first electrode terminal 150a and a second electrode terminal 150b), which may be disposed on one side (e.g., a same side) of the cap plate 140 at a certain spacing. However, the positions of the first electrode terminal 150a and the second electrode terminal 150b in accordance with the present disclosure may vary.

The first electrode terminal 150a and the second electrode terminal 150b may protrude outward through the cap plate 140. Here, the first electrode terminal 150a may be electrically connected to a first electrode, and the second electrode terminal 150b may be electrically connected to a second electrode. Of course, the opposite arrangement is also possible.

The cap plate 140 may include an electrolyte inlet. For example, the electrolyte inlet may be a through-hole formed in the cap plate 140 so that, after the cap plate 140 is coupled to the open end of the case 110 and sealed, an electrolyte may be injected into the case 110. The electrolyte inlet may be sealed with a sealing member after the electrolyte is injected.

The case 110 may include aluminum, and the cap plate 140 may also include aluminum. Because aluminum has a melting point of about 660 degrees Celsius, which is significantly lower than the temperature of the high-temperature heat and gas generated inside the secondary battery 100 during an event such as thermal runaway, the case 110 and cap plate 140, which are formed of aluminum, may be structurally damaged by such high-temperature heat and gas. When multiple secondary battery cells form a battery module, the high-temperature heat and gas may spread or leak to adjacent secondary battery cells, causing even greater damage.

Although only a prismatic secondary battery is shown in FIG. 1, the type of secondary battery may vary. For example, the secondary battery may be a cylindrical battery, a pouch-type battery, or any other type of battery. In this case, the protective member may be formed between the electrode assembly and at least one surface of the case, and the position of the protective member may be suitably changed according to the type of case.

Below, a fracture portion 133 and a non-fracture portion 134 included in the first vent portion 132 will be described in detail with reference to FIGS. 4 to 6.

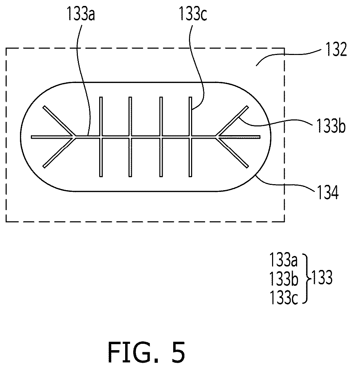

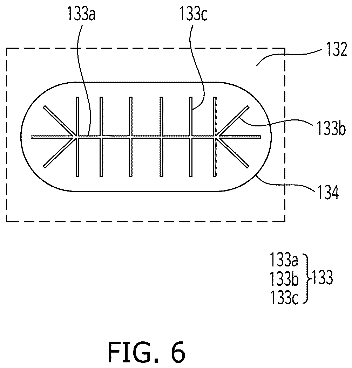

FIG. 4 is a top view illustrating the protective member 130 and the first vent portion 132 included in a secondary battery according to an embodiment of the present disclosure. FIGS. 5 and 6 are top views illustrating a modified first vent portion of a secondary battery according to an embodiment of the present disclosure.

Referring to FIG. 4, as described with respect to FIG. 2, the protective member 130 included in a secondary battery according to an embodiment of the present disclosure may include the pair of first terminal holes 131a, 131b, the first vent hole penetrating the protective member 130, and the first vent portion 132 that seals the first vent hole and includes the fracture portion 133 and the non-fracture portion 134.

The fracture portion 133 may include a first notch 133a formed along a longitudinal direction of the protective member 130, and a second notch 133b extending in the outward direction of the cap plate from a first point of the first notch 133a at a certain angle (e.g., an oblique angle) relative to the first notch 133a.

The second notch 133b may include two diagonally extending notches from the first point of the first notch 133a, and two diagonally extending notches from a second point located at a position symmetrical to the first point of the first notch 133a about the center of the first notch 133a. The first point and the second point may be formed at any location along the first notch 133a, provided that the two points are symmetrical about the center of the first notch 133a.

The depths and widths of the first notch 133a and the second notch 133b may be the same. The shape of the first notch 133a and the second notch 133b may vary as long as the first vent portion 132 can be fractured, and may be variously modified depending on the set pressure at which the fracture portion 133 will break.

The first notch 133a and the second notch 133b may guide cutting of the protective member 130 when the internal pressure rises due to an event such as overcharge or thermal runaway of the secondary battery. In other words, the first notch 133a and the second notch 133b may be fractured to rapidly release the high-temperature heat and gas generated inside the secondary battery.

Additionally, the first vent portion 132 may include additional notches, in addition to the first notch 133a and the second notch 133b, to facilitate opening in response to an increase in internal pressure of the secondary battery or other causes.

For example, referring to FIG. 5, the first vent portion 132 may further include a third notch 133c orthogonal to the first notch 133a and disposed between the second notches 133b arranged at positions symmetrical to each other about the center of the first notch 133a. In FIG. 5, four third notches 133c are illustrated, but the number may vary.

Referring to FIG. 6, the first vent portion 132 may include six third notches 133c orthogonal to the first notch 133a and disposed between the second notches 133b arranged at positions symmetrical to each other about the center of the first notch 133a. In this case, the third notches 133c may be arranged at regular intervals, and the two outermost third notches 133c in the longitudinal direction of the first notch 133a may each intersect at one point with the first notch 133a and the second notch 133b.

As shown in FIGS. 5 and 6, by additionally forming the third notches 133c, the fracture of the first vent portion 132 may occur more easily, thereby guiding the high-temperature heat and gas generated by an event such as thermal runaway to the second vent portion of the cap plate. Furthermore, as the number of the third notches 133c increases, the fracturing of the first vent portion 132 may be facilitated.

Referring to FIGS. 4 to 6, the non-fracture portion 134 may contact an edge of the first vent hole and form an outer shape of the first vent portion 132. The non-fracture portion 134 may remain unfractured even at the set pressure at which the fracture portion 133 breaks. For example, the non-fracture portion 134 may include a notch that is shallower than the first notch 133a and the second notch 133b, so that fracturing does not occur at the set pressure, or it may have no notch formed at all such that fracturing does not occur.

When the internal pressure of the secondary battery increases, the fracture portion 133 of the first vent portion 132 may break to open, while the non-fracture portion 134 remains intact. For example, as the internal pressure of the secondary battery increases, the fracture portion 133 may open by pivoting around the non-fracture portion 134 toward the cap plate, and the distal end of the fracture portion 133 may come into contact with the cap plate. Consequently, the high-temperature heat and gas generated inside the secondary battery may be guided to the second vent portion of the cap plate, which is located at a position corresponding to the first vent portion 132. As the second vent portion opens, the high-temperature heat and gas may be discharged to the outside, preventing damage to the cap plate.

When the non-fracture portion 134 includes a shallower notch than the first notch 133a and the second notch 133b, as compared to a case where the non-fracture portion 134 has no notch, the fracture portion 133 may pivot more easily upon opening, enabling more effective opening of the first vent portion 132 and more efficient discharge of the high-temperature heat and gas generated inside the secondary battery.

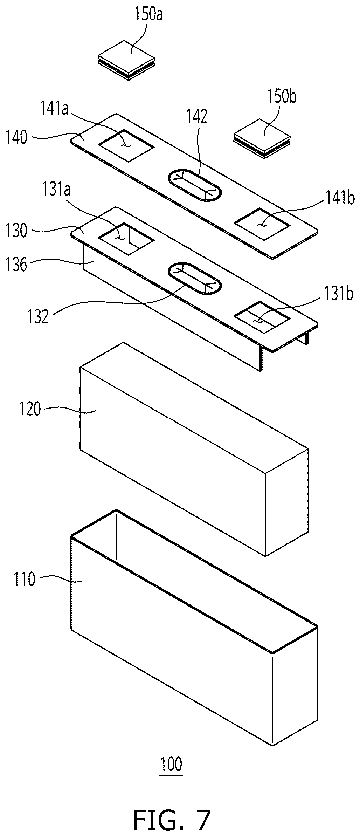

Below, a guide member included in another secondary battery according to an embodiment of the present disclosure will be described in detail with reference to FIGS. 7 to 11.

FIG. 7 illustrates an exploded perspective view of a secondary battery 100 according to an embodiment of the present disclosure.

Referring to FIG. 7, the secondary battery 100 according to an embodiment of the present disclosure may include the electrode assembly 120, the case 110 that accommodates the electrode assembly 120 and includes an opening on at least one side, the cap plate 140 that seals the opening, the pair of electrode terminals 150a, 150b coupled to the cap plate 140 and electrically connected to the electrode assembly 120, the protective member 130 disposed between the electrode assembly 120 and the cap plate 140, and a guide member 136 connected to the protective member 130 and extending from the protective member 130 in a direction oriented toward a surface of the case 110 facing (or opposite) the protective member 130.

While the protective member 130 protects the cap plate 140 from damage caused by high-temperature heat and gas generated inside the secondary battery 100, the guide member 136 may protect the case 110 from damage. Specifically, by having a higher melting point than the case 110, the guide member 136 disposed inside the case 110 may prevent damage to the case 110 caused by high-temperature heat and gas generated inside the secondary battery 100 in an event such as thermal runaway.

The guide member 136 may include the same material as the protective member 130. In other words, the guide member 136 may be integrally formed with the protective member 130 (e.g., of a same material as a seamless and monolithic structure). Because the guide member 136 is formed of the same material as the protective member 130, which has a melting point of greater than or equal to 1,000 degrees Celsius, the guide member 136 may endure without melting under the heat and gas of about 1,000 degrees Celsius generated inside the secondary battery 100 upon an event such as thermal runaway, and thus protect the case 110 from damage.

The guide member 136 may be connected to at least one long side of the protective member 130. By being connected to one long side of the protective member 130 and extending toward the surface of the case 110 facing the protective member 130, the guide member 136 may protect the surface of the case 110 facing the guide member 136.

In addition, as illustrated in FIG. 7, the guide member 136 may be connected to both long sides of the protective member 130 so that the guide members 136 face each other. In this case, the surfaces of the case 110 that face each of the guide members 136 may be protected from the high-temperature heat and gas that may be generated inside the secondary battery 100.

The location and number of guide members 136 may vary. For example, the guide member 136 may be connected not only to a long side of the protective member 130 but also to one or both short sides.

Apart from including the guide member 136, the other configurations of the secondary battery 100 shown in FIG. 7 may be the same as those described in detail with reference to FIG. 1.

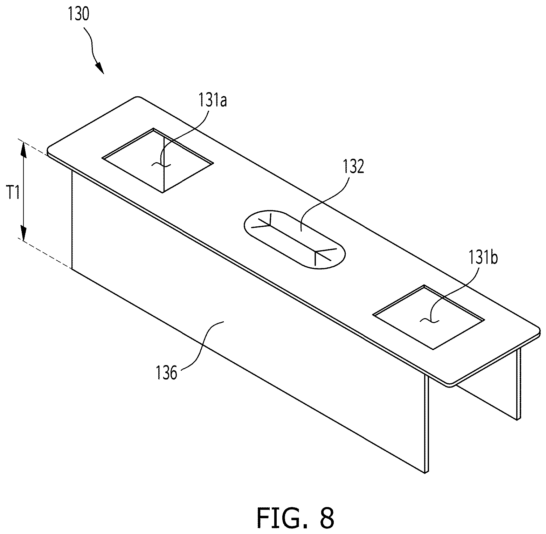

FIGS. 8 to 11 each illustrate a perspective view of the protective member 130 and the guide member 136 included in a secondary battery according to an embodiment of the present disclosure. Specifically, FIGS. 8 to 11 show various lengths of the guide member 136 when the protective member 130 has different configurations.

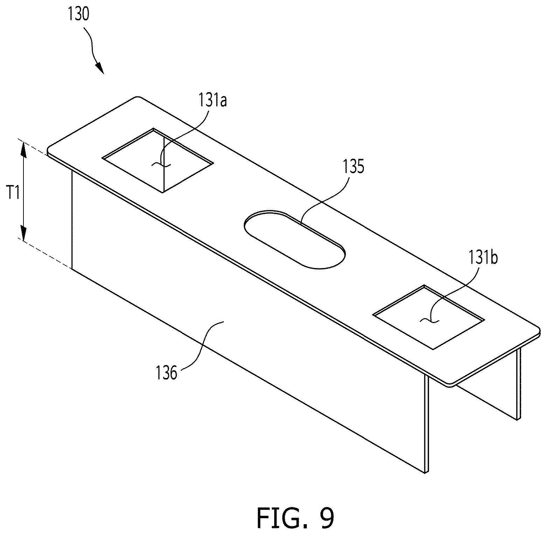

Referring to FIGS. 8 and 9, a length T1 of the guide member 136 according to an embodiment of the present disclosure may be half of a distance from the protective member 130 to a surface of the case facing the protective member 130. For example, in FIG. 8, the protective member 130 may include copper or stainless steel, and may include a first vent hole the first vent portion 132. In another example, in FIG. 9, the protective member 130 may include ceramic or glass, and may include only the first vent hole 135.

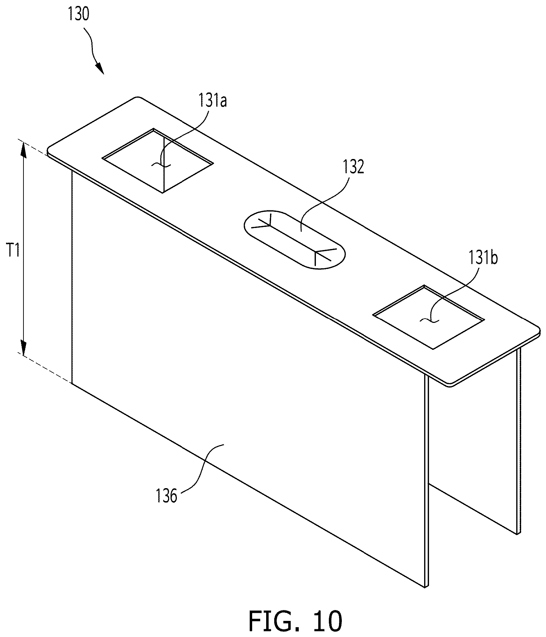

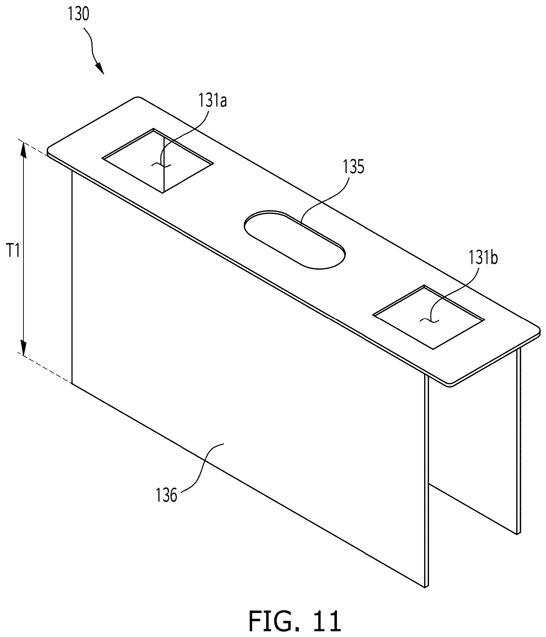

Referring to FIGS. 10 and 11, a length T1 of the guide member 136 according to an embodiment of the present disclosure may be equal to a distance from the protective member 130 to a surface of the case facing the protective member 130. In this case, the area of the case protected by the guide member 136 may be maximized. In FIG. 10, the protective member 130 may have the same configuration as shown in FIG. 8, and in FIG. 11, the protective member 130 may have the same configuration as shown in FIG. 9. The length T1 of the guide member 136 may vary and may be variously designed according to the shape of the case.

By way of summation and review, high-temperature gas and debris discharged through the vent portion of the secondary battery may easily melt a cap plate, as well as a case of the secondary battery, upon contact. Furthermore, when multiple secondary batteries are arranged to form a battery module, high-temperature gas and debris generated in one secondary battery cell during, for example, thermal runaway can propagate to an adjacent cell, causing significant damage to the entire battery module.

In contrast, an aspect of the present disclosure is to provide a protective member between the electrode assembly and the cap plate of the secondary battery, so it is possible to prevent damage to the cap plate caused by high-temperature heat and gas generated inside the secondary battery upon occurrence of an event such as thermal runaway. In addition, in a battery module, it is possible to prevent propagation of the high-temperature heat and gas to an adjacent secondary battery cell and thereby prevent more extensive fire damage. Further, according to some embodiments of the present disclosure, by including a guide member connected to the protective member of the secondary battery, it is possible to prevent damage to the case caused by high-temperature heat and gas generated inside the secondary battery upon occurrence of an event such as thermal runaway.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A secondary battery (100), comprising:
an electrode assembly (120);
a case (110) accommodating the electrode assembly (120), the case (110) including an opening;
a cap plate (140) sealing the opening of the case (110);
a pair of electrode terminals (150a, 150b) coupled to the cap plate (140) and electrically connected to the electrode assembly (120); and
a protective member (130) between the electrode assembly (120) and the cap plate (140).

2. The secondary battery (100) as claimed in claim 1, wherein the protective member (130) includes at least one of copper, stainless steel, tungsten, molybdenum, titanium, chromium, nickel, osmium, and combinations thereof.

3. The secondary battery (100) as claimed in claim 2, wherein the protective member (130) includes:
a pair of first terminal holes (131a, 131b) corresponding to the electrode terminals (150a, 150b) and penetrating the protective member (130);
a first vent hole penetrating the protective member (130); and
a first vent portion (132) sealing the first vent hole and including a fracture portion (133) and a non-fracture portion (134).

4. The secondary battery (100) as claimed in claim 3, wherein the non-fracture portion (134) is in contact with an edge of the first vent hole and defines an outer shape of the first vent portion (132).

5. The secondary battery (100) as claimed in claim 3 or 4, wherein the fracture portion (133) includes:
a first notch (133a) along a longitudinal direction of the protective member (130); and
a second notch(133b) extending in an outward direction of the protective member (130) at a certain angle from a first point of the first notch (133a).

6. The secondary battery (100) as claimed in claim 5, wherein the second notch (133b) includes:
two notches extending diagonally from the first point of the first notch (133a); and
two notches extending diagonally from a second point located at a position symmetrical to the first point of the first notch (133a) about a center of the first notch (133a).

7. The secondary battery (100) as claimed in any one of the preceding claims, wherein the protective member (130) includes at least one of ceramic, glass, silicon, limestone, aluminum oxide, indium tin oxide, magnesium alloy, and combinations thereof.

8. The secondary battery (100) as claimed in claim 7, wherein the protective member (130) includes:
a pair of first terminal holes (131a, 131b) corresponding to the electrode terminals (150a, 150b) and penetrating the protective member (130); and
a first vent hole (135) penetrating the protective member (130).

9. The secondary battery (100) as claimed in any one of the preceding claims, wherein the cap plate (140) includes:
a pair of second terminal holes (141a, 141b) corresponding to the electrode terminals (150a, 150b) and penetrating the cap plate (140);
a second vent hole penetrating the cap plate (140); and
a second vent portion (142) sealing the second vent hole.

10. The secondary battery (100) as claimed in any one of the preceding claims, further comprising:
a guide member (136) connected to the protective member (130) and extending in a direction oriented from the protective member (130) toward a surface of the case (110) facing the protective member (130).

11. The secondary battery (100) as claimed in claim 10, wherein a length of the guide member (136) is half of a distance from the protective member (130) to the surface of the case (110) facing the protective member (130).

12. The secondary battery (100) as claimed in claim 10, wherein a length of the guide member (136) is equal to a distance from the protective member (130) to the surface of the case facing the protective member (130).

13. The secondary battery (100) as claimed in any one of the claims 10 to 12, wherein the guide member (136) includes a same material as the protective member (130).

14. The secondary battery (100) as claimed in any one of the claims 10 to 13, wherein the guide member (136) is connected to at least one long side of the protective member (130).

15. The secondary battery (100) as claimed in any one of the claims 10 to 14, wherein the guide member (136) is connected to two long sides of the protective member (130) so as to face each other.
